(19) Europäisches Patentamt / European Patent Office / Office européen des brevets

(11) **EP 3 572 976 B1**

(12) **FASCICULE DE BREVET EUROPEEN**

(45) Date de publication et mention de la délivrance du brevet:
**01.07.2026 Bulletin 2026/27**

(21) Numéro de dépôt: **19170338.8**

(22) Date de dépôt: **18.04.2019**

(51) Classification Internationale des Brevets (IPC):
**G06V 10/46** *(2022.01)* **G06V 20/52** *(2022.01)*
**G06V 20/58** *(2022.01)* **G06V 40/10** *(2022.01)*

(52) Classification Coopérative des Brevets (CPC):
**G06V 40/103; G06V 10/464; G06V 20/52; G06V 20/58**

(54) **PROCEDE DE TRAITEMENT D'UN FLUX D'IMAGES VIDEO**

VERARBEITUNGSVERFAHREN EINES VIDEOBILDDATENFLUSSES

METHOD FOR PROCESSING A VIDEO IMAGE STREAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.05.2018 FR 1854286**

(43) Date de publication de la demande:
**27.11.2019 Bulletin 2019/48**

(73) Titulaire: **IDEMIA Public Security France**
**92400 Courbevoie (FR)**

(72) Inventeurs:
• **THIEBAUT, Maxime**
**92400 Courbevoie (FR)**
• **DESPIEGEL, Vincent**
**92400 Courbevoie (FR)**
• **CSILLAG, Dora**
**92400 Courbevoie (FR)**

(74) Mandataire: **Marchal, Caroline**
**IPS**
**2, place Samuel de Champlain**
**92400 Courbevoie (FR)**

(56) Documents cités:
**WO-A1-2016/156236 US-A1- 2010 086 200**
**US-A1- 2013 084 013 US-B1- 8 363 939**
**US-B1- 9 740 949**

## Description

La présente invention concerne le traitement d'un flux vidéo en vue d'en analyser les images.

Il s'agit par exemple d'extraire d'enregistrements vidéo des informations utiles à des enquêteurs, permettant l'identification de piétons ou d'autres objets.

Avec l'augmentation du nombre de caméras et l'amélioration de la résolution, le volume de données vidéo à traiter devient considérable et leur exploitation pour trouver des informations pertinentes nécessite des ressources matérielles et humaines importantes.

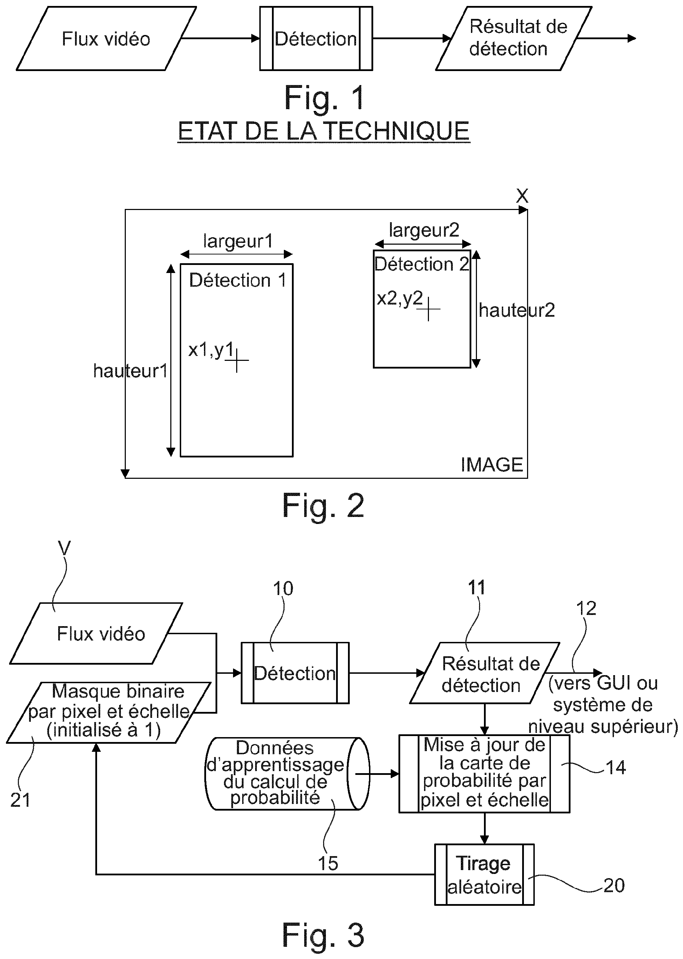

La figure 1 illustre un procédé de traitement de l'art antérieur. Chaque image du flux vidéo subit un traitement de détection qui vise à repérer dans l'image des objets prédéfinis, par exemple piétons ou autres.

L'algorithme de détection a pour objectif de donner des résultats de détection en termes typiquement de position dans l'image, par exemple x,y, et de taille, par exemple hauteur, largeur. On peut représenter l'espace des positions et des échelles par un 4-upplet, par exemple x, y, largeur, hauteur, mais il est possible de généraliser à des formes plus complexes.

On a représenté à la figure 2 deux résultats de détection dans un tel espace, la première détection ayant pour coordonnées (x1, y1, largeur1, hauteur1) dans celui-ci, et la deuxième (x2, y2, largeur2, hauteur2)

Une analyse de reconnaissance peut éventuellement être effectuée sur ces objets, afin par exemple d'identifier un visage ou de lire la plaque d'immatriculation d'un véhicule.

Pour diminuer les temps de traitement au niveau matériel, il est possible de réduire le nombre de pixels analysés en effectuant une décimation du flux vidéo, soit spatialement en redimensionnant ou en recadrant les images, soit temporellement en échantillonnant les images, par exemple en traitant une image toutes les *n* images, *n* valant typiquement entre 2 et 5.

Une telle décimation dégrade toutefois la capacité de détection et tend à accroître les fausses acceptances. En particulier, le redimensionnement de l'image en début de traitement a un impact sur la capacité à détecter des objets de petite taille, tandis que la décimation consistant à ne retenir qu'une image sur *n* a un impact sur les performances de suivi et de détection.

La demande WO 2017/005930 A1 divulgue un procédé de détection d'objets, notamment de piétons, par un traitement comportant le balayage d'une image par une fenêtre glissante de taille fixe prédéterminée, liée à l'échelle de détection. Le balayage s'effectue selon un cycle prédéfini. On mémorise d'abord chaque région d'intérêt d'un premier sous-ensemble ayant donné lieu à la détection d'un objet. Ensuite, on réitère l'analyse pour les images suivantes sur un deuxième sous-ensemble de régions d'intérêt, constitué d'une part des régions d'intérêt précédemment mémorisées et des régions d'intérêt contiguës à celles-ci, et d'autre part des régions d'intérêt obtenues par déplacement de la fenêtre glissante. Un tel procédé de détection déterministe n'est pas complètement satisfaisant, dans la mesure où le déroulement du cycle de détection peut s'avérer peu favorable à la détection rapide d'objets apparaissant dans de nouvelles zones de l'image. De plus, la détection s'effectue sur des fenêtres de forme imposée, ce qui limite la capacité de détection.

Le brevet US 9 740 949 B1 décrit une méthode pour détecter des objets d'intérêt dans une vidéo, utilisant une carte d'attention qui représente des caractéristiques trouvées dans la vidéo d'entrée concernant des objets d'intérêt potentiels. Une carte de fixation des yeux est générée sur la base des fixations oculaires d'un sujet, représentant également des caractéristiques trouvées dans la vidéo d'entrée concernant des objets d'intérêt potentiels. Une carte d'attention synergique améliorée par le cerveau est générée en fusionnant la carte d'attention avec la carte de fixation des yeux, les objets d'intérêt potentiels dans la carte d'attention synergique sont notés, les scores franchissant un seuil prédéterminé étant utilisés pour désigner les objets d'intérêt comme réels ou finaux.

Il existe par conséquent un besoin pour bénéficier d'une solution permettant d'optimiser le temps de traitement et/ou d'améliorer les performances de détection, notamment en réduisant le taux de fausses acceptances.

L'invention répond à ce besoin grâce à un procédé de traitement d'un flux d'images vidéo selon la revendication 1.

Le procédé selon l'invention permet de consacrer en moyenne plus de temps sur les pixels de l'image qui ont une plus grande probabilité de contenir l'information recherchée, indépendamment de la technique utilisée pour la détection.

La carte d'attention peut être initialisée en donnant la même valeur pour tous les points, pour une échelle de détection donnée, par exemple une valeur égale au biais. Ce dernier peut permettre de garantir un taux de détection égal à un taux de détection hors optimisation, à une latence de détection près. Cela permet d'analyser toutes les régions de l'image dans un premier temps, avant de concentrer la recherche ensuite sur certaines zones. Pour un point où, du fait du résultat du tirage et de la valeur du coefficient de la carte d'attention en ce point, on n'effectue pas de détection positive, la valeur du coefficient peut rester inchangée pour ce point à l'échelle de détection concernée, et par exemple égale au biais. Par contre, lorsque l'on effectue une détection positive en un point, la valeur du coefficient en ce point est mise à jour et modifiée pour prendre une valeur conduisant à une fréquence d'analyse plus élevée.

Le biais, qui consiste à donner une valeur non nulle à chaque coefficient de la carte d'attention, assure que tous les pixels finissent par être traités en raison du tirage aléatoire. Le procédé consacre de cette façon un minimum de temps

# EP 3 572 976 B1

aux pixels autres que ceux qui sont amenés de par les valeurs correspondantes de la carte d'attention à être traités le plus fréquemment. Ainsi, le biais amène à consacrer quand même un certain temps de calcul à chaque pixel.

Les valeurs des coefficients de la carte d'attention et notamment le choix de la valeur du biais sont fonction de la nature des objets à détecter et de la manière dont s'effectue la détection. Le calcul des valeurs des coefficients de la carte d'attention s'effectue de préférence par apprentissage à partir d'une base de données représentative du type de détection que l'on cherche à réaliser, par exemple de la nature des objets recherchés et/ou des mouvements sur l'image que l'on cherche à détecter, cette base étant de préférence choisie pour maximiser les performances de détection tout en minimisant les temps de calcul.

On peut encore choisir comme valeur de biais une valeur qui dépend de paramètres, par exemple qui est adaptative en fonction du temps et/ou des ressources disponibles ou de la qualité de détection que l'on souhaite.

Par exemple, si l'on souhaite une qualité de détection plus grande, on peut modifier la valeur du biais pour accroître la fréquence d'analyse en tout point.

L'approche probabiliste du choix des pixels analysés selon l'invention offre une grande liberté dans le choix de la méthode de détection. On peut par exemple, si on le souhaite, appliquer une méthode de détection d'objets reposant sur l'analyse de régions d'intérêt ou une méthode de détection reposant sur une détection de mouvement, ne faisant pas intervenir de régions d'intérêt, cette dernière ne faisant pas partie de l'invention revendiquée.

Le tirage aléatoire permet de ne pas privilégier de zone particulière parmi celles où l'on ne s'attend pas à trouver de l'information a priori. Ainsi, en cas de changement survenant dans une telle zone, celui-ci peut être détecté rapidement.

Ce procédé est de préférence mis en œuvre à plusieurs échelles de détection. La probabilité de trouver avec l'analyse d'un pixel donné une information recherchée peut en effet varier avec la taille de l'objet que l'on cherche à détecter On peut faire dépendre le calcul des coefficients de la carte d'attention du résultat d'au moins une détection précédente et/ou des valeurs des coefficients d'au moins une carte d'attention précédente. Par exemple, on peut donner lors de la mise à jour de la carte d'attention à un coefficient de la carte d'attention en un point une valeur conduisant à une fréquence analyse d'autant plus élevée que ce point est proche, dans l'espace des positions et des échelles (x, y, hauteur, largeur) d'une détection positive. La notion de proximité est une fonction qui est définie pour chaque type de détection, et cette fonction peut être apprise sur des données représentatives. Par exemple, pour un algorithme de détection simultanée de véhicule et de piéton, la notion de proximité n'est pas la même pour le véhicule et le piéton, car les vitesses attendues des objets sont différentes. Il est possible d'adapter dynamiquement les paramètres définissant la notion de proximité, en fonction par exemple de la vitesse mesurée des objets et/ou d'une calibration préliminaire de la caméra.

Il est également possible d'introduire un biais statistique qui soit statique dans l'espace, par exemple si l'on souhaite privilégier en permanence une zone donnée dans le champ de vision de la caméra, par exemple au centre de celui-ci. Un tel biais statique est par exemple fonction des coordonnées x, y, de la hauteur et de la largeur de l'objet, ce qui permet de privilégier dans une zone donnée du champ de vue, par exemple au centre de l'image, des objets d'une taille donnée. L'invention est appliquée à la détection d'objets, tels que des piétons par exemple.

En variante, qui ne fait pas partie de l'invention revendiquée, l'invention s'applique à la détection de mouvements sur une image.

Il peut s'agir de tout type d'objet, par exemple piéton, animal, véhicule ...

En fonction du résultat de la détection pour une image donnée à une échelle donnée, au moins une région d'intérêt dans cette image à cette échelle est définie, et l'on met à jour pour le traitement d'au moins une image suivante la carte d'attention à cette échelle sur la base de cette région d'intérêt, en portant à une valeur prédéfinie choisie en fonction de la valeur du biais tous les points de la carte d'attention correspondant à cette région d'intérêt à cette échelle.

La valeur de la carte d'attention en un point peut être donnée par la formule suivante, quelle que soit la nature de l'objet et l'algorithme de détection correspondant, par exemple adapté à la détection de piétons ou à la détection du mouvement :

$$\text{carte\_attention}(t+1) = \max\left(\textbf{probabilité}_{\textbf{biais}},\right.$$
$$\left.\text{filtre\_temporelfonction\_proximité}(\text{sortie\_algo}(i))_{i<=t})\right) \quad (1)$$

Dans cette expression, « carte_attention(t+1) « désigne la carte d'attention, homogène à une carte de probabilité, à l'instant t+1, étant calculée à partir de données à l'instant t ou à des instants précédents.

Dans un exemple de mise en œuvre, une valeur à 1 en un point indique une attention maximale à l'image suivante, tandis qu'une valeur à 0 traduit une attention nulle.

La fonction « max » correspond à la fonction maximum
« fonction_proximité » désigne une fonction qui transforme une sortie d'algorithme en une carte de probabilité.

Dans un exemple de mise en œuvre, cette fonction donne des valeurs hautes à proximité d'une détection. Dans ce cas, la valeur maximale de la carte d'attention peut être de 1. Elle peut également s'adapter à des paramètres extérieurs tels que la vitesse de déplacement des objets ou la configuration de la scène.

L'expression « Sortie_algo(i) » désigne la sortie de l'algorithme de détection à l'instant i. Il peut s'agir de boîtes englobantes, de segmentation, de carte de mouvement, etc.

La fonction « Filtre_temporel » désigne un filtre temporel dont l'objectif est de fusionner plusieurs cartes de probabilités, typiquement en donnant un poids plus fort aux instants proches (t, t-1, t-2, ....). Ce peut permettre de prendre une décision quant au choix de procéder ou non à l'analyse d'un point qui prend en compte un certain historique des détections en ce point ou à proximité par exemple .Dans le cadre de la détection d'objets une première recherche sur l'image à une première échelle est effectuée, c'est-à-dire avec x,y variables pour $l$ et $h$, qui caractérisent l'échelle de détection, fixés dans l'espace (x,y,l,h), où x et y sont les coordonnées dans l'image et $l$ et $h$ la largeur et la hauteur de la fenêtre de détection, fixés par exemple à $l_1$ et $h_1$, puis une deuxième recherche sur l'image à une deuxième échelle, c'est-à-dire avec x et y variable et 1 et h fixés respectivement à d'autres valeurs $l_2$ et $h_2$ différentes de $l_1$ et $h_1$. Une détection positive permet de définir une région d'intérêt pour le traitement d'au moins une image suivante. Cette région d'intérêt peut avoir au moins la taille de la détection. L'état des coefficients de la carte relatifs à une zone où une détection positive a lieu peut ainsi être mis à jour pour l'image suivante.

Dans un exemple de mise en œuvre et dans le cas de la détection d'objets notamment, tels que des piétons par exemple, les coefficients de la carte d'attention dans cette région d'intérêt peuvent prendre soit une valeur extrêmale qui force la sélection, par exemple la valeur 1, c'est-à-dire que l'on force l'analyse en ce point dans l'espace des positions et échelles, soit la valeur du biais sinon, ce qui revient à effectuer la détection à une fréquence plus faible, le nombre d'images successives sans détection en un point donné dépendant du biais. Par exemple,plus ce biais est faible, plus on laisse passer un nombre élevé d'images du flux vidéo sans analyser l'image en ce point. La valeur extrêmale peut être donnée en un point de la carte d'attention pour le traitement de l'image de rang N+1 dans le flux vidéo si le point en question correspond à une détection positive à l'image N ou est suffisamment proche spatialement et temporellement d'une détection positive à une image antérieure. Dans une variante, on remplace la valeur qui force la détection, par exemple la valeur 1 comme ci-dessus, par une valeur proche mais non extrêmale, de façon à économiser les ressources. Dans ce cas, la fréquence d'analyse reste relativement élevée là dans la région d'intérêt mais l'analyse n'a pas lieu systématiquement dans la région d'intérêt à chaque itération.

Un masque binaire par échelle de détection peut être généré à l'étape b) à partir de la carte d'attention, ce masque binaire étant appliqué à au moins une image du flux à analyser à l'étape c), l'analyse s'effectuant sur les seuls pixels non masqués, tous les pixels du masque étant de préférence initialisés à une même valeur correspondant à l'absence de masquage

Conformément à un aspect de l'invention défini plus haut, un tirage est effectué pour sélectionner au moins une partie des points sur lesquels s'effectue l'analyse, notamment pour déterminer sur quels pixels de l'image situés hors des zones d'intérêt s'effectue l'analyse. Ce tirage peut avoir lieu pour à chaque coefficient de la carte d'attention ou seulement pour ceux dont la valeur n'est pas extrêmale au point de forcer l'analyse en ce point, et le résultat de la comparaison de ce tirage avec la valeur du coefficient détermine la valeur du masque binaire. Par « tirage » on désigne le fait de générer des nombres compris entre certaines limites, par exemple entre 0 et 1. Ce tirage est aléatoire. On a ainsi une décimation aléatoire du flux vidéo à l'extérieur des zones d'intérêt, et une sélection aléatoire des pixels analysés, avec une probabilité plus forte d'analyse des pixels dans la ou les zones d'intérêt, du fait de la prise en compte des valeurs de la carte d'attention dans la création du masque.

Comme mentionné ci-dessus, la carte d'attention peut être initialisée en donnant la même valeur pour tous les pixels. Cela permet d'analyser toutes les régions de l'image dans un premier temps, avant de concentrer la recherche ensuite sur les régions d'intérêt. Les valeurs prises par les coefficients de la carte d'attention dépendent du résultat de la détection. La valeur affectée à un coefficient associé à un pixel à une échelle de détection peut dépendre des états de ce pixel aux images précédentes et du résultat de la détection. Par exemple, la valeur d'un coefficient de la carte d'attention associé à un pixel donné à une échelle de détection à un instant donné peut être d'autant plus extrême, notamment forte, qu'il y a eu une détection proche de ce pixel sur l'image, et/ou qu'un score de confiance non seuillé (c'est-à-dire non binaire) de ce pixel ou dans un voisinage de ce pixel dans l'image, à une échelle de détection et à un instant de détection, est élevé. Cela peut être le cas par exemple de la détection de mouvement, où l'on peut travailler directement sur une carte non seuillée, avec un algorithme de détection qui fonctionne au niveau du pixel. Cela peut également être le cas de la détection de piétons, si l'on fonctionne au niveau du pixel également.

Comme évoqué plus haut, la fréquence d'analyse avec laquelle s'effectue l'analyse hors de la ou des régions d'intérêt est commandée par l'introduction d'un biais dans la carte d'attention à l'extérieur de la ou des régions d'intérêt. Ce biais correspond à la valeur donnée par la carte d'attention à chaque pixel de l'image à une échelle de détection donnée. La présence du biais assure que tous les pixels de l'image sont analysés après un certain temps de latence, même si la probabilité que ces pixels contiennent de l'information recherchée est faible. Ainsi un nouvel objet entrant dans le champ de la caméra ne sera pas détecté immédiatement, mais le sera sur les images suivantes.

Le biais peut ainsi être choisi de façon à assurer une analyse de tous les pixels hors de la ou des régions d'intérêt avec un temps de latence de $m$ images, avec $m$ compris entre 3 et 10 images, de préférence égal à 5. Autrement dit, chaque pixel est analysé en moyenne au plus tard chaque *m* images. Une valeur de 5 est relativement transparente en termes de performance algorithmique de détection ou d'expérience utilisateur dans le cas de la détection et du suivi de piéton avec une vidéo à 25 images/s. La fréquence d'analyse correspond à l'inverse du temps de latence. Dans les régions d'intérêt, la fréquence d'analyse peut être de 1, c'est-à-dire qu'un pixel donné de ces régions d'intérêt est analysé pour chaque image du flux vidéo, ou proche de 1, c'est-à-dire qu'un pixel donné est analysé en moyenne toutes les *n* images, avec *n* proche de 1, tandis qu'en dehors des régions d'intérêt, un pixel donné est analysé en moyenne toutes les *k* images, avec *k>n*. Pour un pixel où, du fait du résultat du tirage et de la valeur du coefficient de la carte d'attention, on n'effectue pas de détection, la valeur du coefficient peut rester inchangée pour ce pixel et cette échelle de détection. Par contre, lorsque l'on effectue une détection dans une zone donnée, l'état des coefficients de la carte relatifs à cette zone est mis à jour en fonction des caractéristiques de la détection.

Lorsque la détection est positive dans au moins deux régions d'intérêt proches, le procédé comporte de préférence la fusion de ces régions d'intérêt et la mise à jour correspondante des coefficients associés de la carte d'attention pour le traitement d'au moins une image suivante.

Lorsque la détection est positive en au moins un point dans l'espace des positions et des échelles pour une image donnée, le procédé comporte de préférence la génération d'une région d'intérêt élargie par rapport aux dimensions d'une fenêtre d'analyse donnée par l'échelle à laquelle s'effectue l'analyse, et la mise à jour correspondante des coefficients associés de la carte d'attention pour le traitement de l'image suivante. Chaque région d'intérêt peut ainsi être déterminée en prenant une zone de l'image élargie autour d'une information recherchée précédemment détectée. On anticipe de cette façon le fait qu'un objet précédemment détecté est susceptible de se déplacer sur l'image, et l'on choisit la taille de la zone élargie de telle sorte qu'elle englobe le déplacement possible de l'objet sur l'image. Par exemple, si l'information précédemment détectée est un piéton, la zone élargie peut être un rectangle qui englobe ce piéton.

La zone d'intérêt élargie peut être déterminée par dilatation morphologique. En particulier, au moins une région d'intérêt associée à un objet détecté peut être déterminée par une dilatation morphologique de cet objet détecté. Les paramètres de la dilatation morphologique peuvent être fixes ou variables, et notamment dépendre de la taille de la région d'intérêt. La taille d'une région d'intérêt peut faire au moins deux fois celle d'un objet précédemment détecté qui se trouve à l'intérieur, voire trois fois ou plus.

La détermination des régions d'intérêt à partir des détections effectuées dans l'espace des positions et des échelles peut se faire selon des règles déterminées par apprentissage, à l'aide d'une base de données apprise à partir de données représentatives, comme mentionné plus haut. Le choix de la forme et des dimensions de la zone élargie précitée peuvent ainsi résulter d'un apprentissage.

Dans le cas de la détection de mouvement, chaque pixel de l'image peut être analysé avec une fréquence qui est déterminée par les valeurs de la carte d'attention.

Le procédé selon l'invention peut être mis en œuvre à différentes résolutions d'images et indépendamment pour chacun des pixels.

La carte d'attention de l'étape a) peut être calculée à partir d'une carte de probabilité de mouvement des pixels de l'image. La carte d'attention est par exemple calculée à partir de cette carte de probabilité et d'une fonction de transfert qui commande la fréquence d'analyse des pixels. Plus la probabilité de mouvement d'un pixel sur l'image est grande, plus la carte d'attention aura pour ce pixel une valeur qui entraîne une analyse fréquente de ce pixel ; a contrario, un pixel qui reste immobile sur les images, car il correspond par exemple à un fond fixe, aura une faible probabilité de mouvement et la carte d'attention pour ce pixel aura une valeur choisie à un biais qui entraîne une analyse de ce pixel à une fréquence faible mais suffisante pour ne pas dégrader outre mesure la capacité de détection du système.

La carte d'attention peut être calculée à partir de la formule générale (1) donnée plus haut.

Dans un cas particulier, la carte d'attention est calculée à partir de la carte de probabilité de mouvement et d'une fonction de transfert, par exemple de la façon suivante :

$$\text{carte}_{\text{attention}} = \max(\text{probabilité}_{\text{biais}}, \text{dilatation}(\text{carte}_{\text{mouvement}})).$$

La dilatation en question est par exemple la dilatation morphologique.

Par exemple, là où la dilatation est nulle, car on est trop loin de l'objet, on prend comme valeur pour le coefficient associé de la carte d'attention la valeur du biais. Là où la valeur résultant de la dilatation est supérieure au biais, on prend cette valeur supérieure.

L'invention a encore pour objet un produit programme d'ordinateur comportant un ensemble de lignes d'instructions enregistrées sur un support ou téléchargeables depuis un serveur, pour, lorsqu'exécutées sur un ordinateur, provoquer le traitement d'images selon le procédé selon l'invention tel que défini plus haut.

L'invention a encore pour objet un système de traitement vidéo pour la mise en œuvre du procédé selon l'invention, comportant au moins une caméra ou un système d'enregistrement vidéo générant un flux vidéo et un système de traitement de ce flux vidéo, comportant des moyens informatiques tels qu'un processeur dédié ou un microordinateur pour traiter les images en vue d'y rechercher une information donnée, configuré pour mettre en œuvre le procédé selon l'invention, tel que défini ci-dessus. En particulier, ce traitement peut avoir lieu en temps réel ou en temps différé.

Les caractéristiques de l'invention énoncées en liaison avec le procédé valent pour le produit programme d'ordinateur et le système de traitement vidéo.

Brève description des figures

L'invention pourra être mieux comprise à la lecture de la description détaillée qui va suivre, d'exemples non limitatifs de mise en œuvre de celle-ci, et à l'examen du dessin annexé, sur lequel :

- la figure 1 précédemment décrite, correspond à l'art antérieur,
- la figure 2 illustre la notion d'espace de positions et d'échelles sur une image,
- la figure 3 est un schéma en blocs illustrant un exemple de procédé selon l'invention,
- les figures 4A et 4B sont deux exemples d'images extraites d'un flux vidéo, dans le cadre de l'application de l'invention à la détection d'objets, sur lesquelles on a tracé le contour des objets détectés et des zones d'intérêt,
- la figure 5 est un autre exemple d'image dans le cas de l'application de l'invention à la détection de mouvement, et
- la figure 6 représente la carte d'attention correspondant à l'image de la figure 5.

On va décrire en référence à la figure 3 un exemple de procédé de traitement selon l'invention, destiné à traiter un flux vidéo V.

Il s'agit par exemple d'un flux vidéo provenant de caméras de vidéosurveillance, et l'on souhaite rechercher dans les images de ce flux une information donnée, par exemple trouver un objet ayant des caractéristiques prédéfinies, tel qu'un piéton. En variante, il s'agit d'une détection de mouvement.

Le procédé comprend un moteur de détection 10 qui fournit un résultat de détection 11. Le moteur de détection peut faire appel à différentes techniques de détection, à différentes échelles de détection, selon que l'on cherche à détecter un objet tel qu'un piéton par exemple ou à effectuer une détection de mouvement. Le moteur de détection 10 correspond à un algorithme mis en œuvre au sein d'un microordinateur ou d'un processeur dédié.

Parmi les techniques de détection pouvant être utilisées dans le cadre de la détection d'un objet notamment, on peut citer l'ACF (Agregated Channel Features), le DPM (Deformable Part Models), l'apprentissage profond (Deep Learning), entre autres.

L'article Fast Feature Pyramids for Object Detection de Piotr Dollar et al décrit dans SUBMISSIONS TO IEEE TRANSACTIONS ON PATTERN ANALYSIS AND MACHINE INTELLIGENCE 2014/09 des exemples de techniques pouvant être utilisées.

L'article Fast Human Detection for Intelligent Monitoring Using Surveillance Visible Sensors de Byoung Chul Ko et al paru dans Sensors 2014, 14, 21247-21257 divulgue d'effectuer une détection de piétons en déterminant un facteur d'échelle optimal de par l'utilisation de régions d'intérêt adaptatives.

Le résultat de la détection, à savoir la présence d'objets prédéfinis dans les images ou la présence d'un mouvement, peut être selon les applications envoyé en 12 à un système de niveau supérieur, afin par exemple de traiter ces objets en vue de les identifier.

Que ce soit pour la détection d'objets ou de mouvement, le procédé selon l'invention repose sur l'utilisation d'au moins une carte d'attention dans un espace de positions et d'échelles de détection donné. Par « carte d'attention » on désigne une matrice dont les coefficients sont associés à des points de l'espace des positions et des échelles. La valeur de chaque coefficient est représentative de l'attention que doit porter l'algorithme de détection à ce point, autrement dit une attention plus élevée là où de l'information est susceptible de se trouver compte-tenu du résultat de l'analyse des images précédemment effectuée, comparativement aux emplacements sur l'image où il est peu probable que se trouve l'information recherchée au vu de ce résultat. Cette attention plus élevée se traduit par une fréquence d'analyse des pixels concernés plus grande.

Le procédé comporte une étape de mise à jour de chaque carte d'attention pour une échelle de détection donnée au vu du résultat 11 de la détection à cette échelle, cette mise à jour pouvant s'effectuer également le cas échéant en tenant compte des valeurs précédemment prises par la carte lors du traitement des images précédentes.

Tous les coefficients de la carte d'attention peuvent avoir été initialisés à une même valeur, par exemple un biais *b* non nul compris entre 0 et 1, bornes exclues.

La mise à jour de la carte d'attention à l'étape 14 sur la figure 3 s'effectue d'après des données apprises 15. L'apprentissage de ces données peut s'effectuer de diverses façons. Il s'agit d'apprendre au système là où la probabilité de trouver de l'information recherchée est la plus grande compte-tenu de la nature et/ou de l'emplacement des objets détectés et de leur mouvement, le cas échéant.

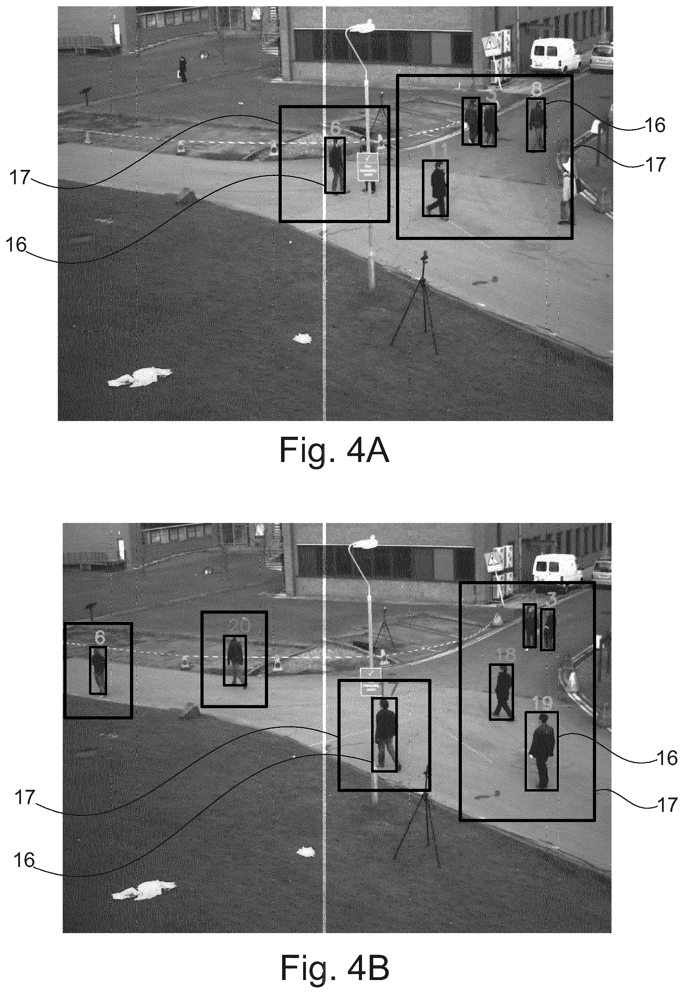

Si l'on se réfère à l'exemple de la figure 4A, qui concerne la détection d'objets, on a matérialisé sur l'image les objets détectés, en l'espèce des piétons. Ces objets sont délimités par des rectangles 16 dont les grands côtés sont verticaux.

La mise à jour de la carte d'attention comporte la mise à jour de la valeur des coefficients de la carte d'attention qui correspondent dans cet exemple aux pixels englobés par ces rectangles et qui sont analysés.

De façon avantageuse, on définit dans l'exemple de la détection de piétons des régions d'intérêt élargies autour des objets détectés pour tenir compte que ces objets se déplacent sur l'image, et ainsi faire en sorte qu'à l'image suivante l'analyse porte préférentiellement sur ces régions.

La forme des régions d'intérêt élargie peut résulter d'un apprentissage, et tenir compte de la nature des objets et/ou de leur mouvement.

On peut déterminer les régions d'intérêt élargies en faisant subir aux objets détectés une transformation mathématique, telle qu'une dilatation morphologique par exemple.

Sur la figure 4A, on a fait apparaître le contour 17 des régions d'intérêt élargies. Si lors du calcul des régions d'intérêt élargies associées aux différents objets détectés on obtient des recouvrements de zones ou des zones proches, on peut fusionner ces zones en une seule, ce qui est le cas de la zone située à droite sur la figure 4A. On peut voir que chaque région d'intérêt élargie occupe une surface égale à plusieurs fois celle du ou des objets contenus à l'intérieur, par exemple au moins 3 fois.

La figure 4B représente une image provenant de la même caméra à un instant différent. On voit que les régions d'intérêt élargies restent centrées sur les piétons détectés.

La carte d'attention voit ses coefficients dans les régions d'intérêt élargies mis à jour. On donne une valeur plus élevée à un coefficient pour traduire une probabilité plus élevée que le pixel associé à ce coefficient de la carte d'attention contienne de l'information recherchée. Tous les coefficients de la carte d'attention correspondant à des régions d'intérêt peuvent prendre par exemple une valeur extrêmale c, par exemple maximale et par exemple égale à 1, pour forcer la détection en ces points.

Plusieurs cartes d'attention sont ainsi mises à jour après traitement de chaque image du flux, étant donné qu'il y a dans l'exemple considéré une carte par échelle de détection.

Ensuite, on fait en sorte que l'on analyse plus souvent les pixels situés dans les zones d'intérêt qu'en dehors de ces zones.

Toutefois, on vient régulièrement observer en dehors des régions d'intérêt, pour détecter de nouveaux objets qui viendraient à faire leur apparition dans celles-ci.

Pour cela, on procède pour chaque échelle de détection à un tirage aléatoire 20, comme illustré à la figure 3, et l'on génère sur la base de ce tirage et de la carte d'attention un masque binaire 21 qui va déterminer les zones où s'effectuera la détection, tous les pixels de ce masque étant dans cet exemple initialement à 1 pour assurer que la détection 10 initiale porte sur tous les pixels de l'image.

On fait par exemple un tirage aléatoire entre 0 et 1 et l'on compare la valeur de ce tirage à la valeur de la carte d'attention en un point. En supposant par exemple que le biais $b$ est de 0,2, que la valeur des coefficients de la carte d'attention dans les régions d'intérêt est maximale et vaut $c=1$ le masque binaire prend la valeur 1 dès lors que le tirage est supérieur à la valeur du coefficient de la carte d'attention, ce qui implique que l'on analyse le pixel correspondant de l'image à l'étape 10. Par exemple, en supposant un tirage égal à 0,5, pour un coefficient de la carte correspondant à un pixel situé hors d'une zone d'intérêt, égal à 0,2, le masque prend la valeur 0 car la valeur du coefficient est inférieure au tirage; le pixel correspondant de l'image n'est pas analysé à l'étape 10 ; pour un tirage égal à 0,1, le pixel est analysé car la valeur du coefficient est supérieure au tirage. Pour un coefficient de la carte d'attention correspondant à un pixel situé dans une zone d'intérêt, le tirage est toujours inférieur à 1 et le pixel sera toujours analysé à l'étape 10. Un pixel situé hors d'une zone d'intérêt conduira donc à un masque binaire qui statistiquement prendra plus souvent la valeur 0 qu'un pixel situé dans une zone d'intérêt. Ainsi, les pixels situés dans les régions d'intérêt seront analysés en moyenne plus fréquemment que les autres. Le tirage peut être réalisé pour tous les pixels, mais la décision est dépendante de la carte d'attention. Le biais garantit que l'on ne perd pas en détection. La valeur du biais b conditionne le temps de latence, c'est-à-dire le nombre d'images qui seront analysées en moyenne sans qu'un pixel donné situé hors d'une zone d'intérêt ne soit analysé. Par exemple, ce temps de latence est de cinq environ dans le cadre de la détection de piétons pour une vidéo fournissant 25 images/s; cela signifie que dans la zone de l'image correspondant à la pelouse en bas à gauche sur les figures 4A et 4B, un pixel n'est analysé en moyenne que toutes les 5 images ; on comprend que l'on gagne en efficacité dans le traitement, puisque l'on évite une analyse inutile à l'étape de détection 10 dans une zone où il est peu probable qu'un piéton se déplace, l'analyse se concentrant de façon automatique sur les régions où la probabilité est la plus forte de détecter des piétons d'une image à l'autre.

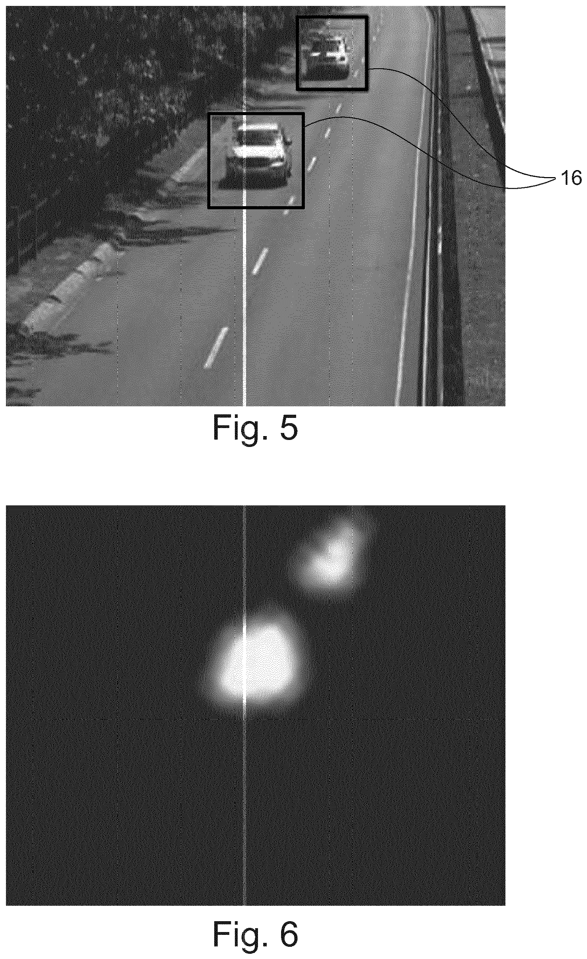

Lorsque le procédé est appliqué à la détection de mouvement sur l'image, le calcul des coefficients de la carte d'attention tient compte d'une carte de probabilité de mouvement, comme illustré à la figure 5. Sur cette figure on voit des objets 16 constitués par deux véhicules en mouvement apparaissant sur l'image. La figure 6 représente la carte de probabilité de mouvement, calculée à partir de plusieurs images précédentes du flux vidéo, à partir de la réponse de chacun des pixels. On voit que la probabilité de mouvement détectée est forte au niveau des véhicules, et nulle ailleurs.

La carte d'attention peut être calculée à partir de cette carte de probabilité de mouvement et d'une fonction de transfert, par exemple de la façon suivante :

$$\text{carte}_{\text{attention}} = \max(\text{probabilité}_{\text{biais}}, \text{dilatation}(\text{carte}_{\text{mouvement}}))$$

La dilatation en question est par exemple la dilatation morphologique.

Là où la dilatation est nulle, car on est trop loin de l'objet, on prend comme valeur pour le coefficient de la carte d'attention la valeur du biais b. Là où la valeur résultant de la dilatation est supérieure au biais b, on prend cette valeur supérieure.

Bien entendu, l'invention n'est pas limitée aux exemples qui viennent d'être décrits.

On peut notamment appliquer l'invention à des flux vidéo autres que provenant de caméras de surveillance, par exemple une caméra équipant un véhicule dans le but de faire de l'évitement de piétons.

**Revendications**

1. Procédé de traitement d'un flux d'images vidéo , dans lequel le procédé est mis en œuvre par ordinateur, pour y détecter des objets prédéfinis, comportant les étapes consistant à :

   a) fournir une carte d'attention dans un espace des positions et des échelles d'une image du flux d'images vidéo, la valeur de la carte d'attention en un point étant représentative d'une probabilité de détecter les objets prédéfinis à une première échelle de détection en un pixel de ladite image du flux d'images vidéo associé audit point,
   b) pour chaque point de la carte d'attention, sélectionner ce point lorsque la valeur de la carte d'attention en ce point est supérieure à une valeur résultant d'un tirage aléatoire, un biais étant introduit dans la carte pour conférer en tout point une probabilité de sélection non nulle,
   c) analyser les pixels associés aux points sélectionnés pour y détecter les objets prédéfinis à la première échelle de détection,
   d) lorsqu'une détection est positive en au moins un point à l'issue de l'analyse effectuée en c), définir au moins une région d'intérêt dans ladite image du flux d'images vidéo, la taille de l'au moins une région d'intérêt étant au moins celle de la première échelle de détection, et mettre à jour pour le traitement de l'image suivante la carte d'attention en portant à une valeur supérieure au biais tous les pixels de cette région d'intérêt,
   e) réitérer les étapes a) à d) pour chaque nouvelle image du flux d'images vidéo et/ou pour l'image en cours en substituant à la première échelle de détection une deuxième échelle de détection différente de la première échelle de détection.

2. Procédé selon la revendication 1, la carte d'attention étant initialisée en donnant la même valeur pour tous les points, notamment une valeur égale au biais.

3. Procédé selon l'une quelconque des revendications précédentes, étant appliqué à la détection de piétons.

4. Procédé selon l'une des revendications 1 à 3, les coefficients de la carte d'attention prenant soit une valeur extrême qui force la sélection, notamment dans chaque région d'intérêt, soit la valeur du biais sinon.

5. Procédé selon l'une des revendications 1 à 4, un masque binaire étant généré à l'étape b) à partir de la carte d'attention et du tirage aléatoire, ce masque binaire étant appliqué à l'image du flux d'images vidéo, l'analyse de l'étape c) s'effectuant sur les seuls pixels non masqués, tous les pixels du masque étant de préférence initialisés à une même valeur correspondant à l'absence de masquage.

6. Procédé selon l'une des revendications 1 à 5, la détection étant positive dans au moins deux régions d'intérêt proches, le procédé comportant la fusion de ces régions d'intérêt et la mise à jour correspondante des coefficients associés de la carte d'attention pour le traitement d'au moins une image suivante.

7. Procédé selon l'une quelconque des revendications 1 à 6, dans lequel la taille de l'au moins une région d'intérêt est élargie par rapport aux dimensions d'une fenêtre d'analyse donnée par la première échelle de détection à laquelle s'effectue l'analyse de l'étape c).

8. Procédé selon la revendication 7, dans lequel pour déterminer la taille élargie de l'au moins une région d'intérêt, il est procédé à une dilatation morphologique.

9. Procédé selon la revendication 8, les paramètres de la dilatation morphologique étant fixes.

10. Procédé selon la revendication 8, les paramètres de la dilatation morphologique étant dynamiques, notamment dépendant de la taille de la région d'intérêt ou de la vitesse de déplacement de l'objet.

11. Produit programme d'ordinateur comportant un ensemble de lignes d'instructions enregistrées sur un support ou téléchargeables depuis un serveur, pour, lorsqu'exécutées sur un ordinateur, provoquer le traitement d'images selon le procédé tel que défini dans l'une quelconque des revendications précédentes.

**Patentansprüche**

1. Verfahren zur Verarbeitung eines Videobildstroms, wobei das Verfahren computergestützt durchgeführt wird, um darin vordefinierte Objekte zu erkennen , mit den folgenden Schritten:

   a) Bereitstellen einer Aufmerksamkeitskarte in einem Raum aus Positionen und Skalen eines Bildes des Videobildstroms, wobei der Wert der Aufmerksamkeitskarte an einem Punkt repräsentativ für eine Wahrscheinlichkeit ist, die vordefinierten Objekte bei einer ersten Erkennungsskala an einem Pixel des genannten Bildes des Videobildstroms zu erkennen, das dem genannten Punkt zugeordnet ist,
   b) für jeden Punkt der Aufmerksamkeitskarte diesen Punkt auswählen, wenn der Wert der Aufmerksamkeitskarte an diesem Punkt größer ist als ein Wert, der sich aus einer Zufallsauswahl ergibt, wobei in die Karte eine Verzerrung eingebracht wird, um jedem Punkt eine von Null verschiedene Auswahlwahrscheinlichkeit zuzuweisen,
   c) die den ausgewählten Punkten zugeordneten Pixel analysieren, um darin die vordefinierten Objekte auf der ersten Erkennungsstufe zu erkennen,
   d) wenn nach Abschluss der in c) durchgeführten Analyse ein positiver Erkennungsbefund vorliegt, mindestens einen Region von Interesse in dem genannten Bild des Videobildstroms festlegen, wobei die Größe der mindestens einen Region von Interesse mindestens der der ersten Erkennungsskala entspricht, und für die Verarbeitung des nächsten Bildes die Aufmerksamkeitskarte aktualisieren, indem alle Pixel dieser Region von Interesse auf einen Wert gesetzt werden, der größer ist als der Bias,
   e) Wiederholen der Schritte a) bis d) für jedes neue Bild des Videobildstroms und/oder für das aktuelle Bild, wobei die erste Erkennungsstufe durch eine zweite Erkennungsstufe ersetzt wird, die sich von der ersten Erkennungsstufe unterscheidet.

2. Verfahren nach Anspruch 1, wobei die Aufmerksamkeitskarte initialisiert wird, indem allen Punkten derselbe Wert zugewiesen wird, insbesondere ein Wert, der dem Bias entspricht.

3. Verfahren nach einem der vorstehenden Ansprüche, das auf die Erkennung von Fußgängern angewendet wird.

4. Verfahren nach einem der Ansprüche 1 bis 3, wobei die Koeffizienten der Aufmerksamkeitskarte entweder einen Extremwert annehmen, der die Auswahl erzwingt, insbesondere in jedem Bereich von Interesse, oder andernfalls den Wert des Bias.

5. Verfahren nach einem der Ansprüche 1 bis 4, wobei in Schritt b) aus der Aufmerksamkeitskarte und der Zufallsauswahl eine binäre Maske erzeugt wird, die auf das Bild des Videobildstroms angewendet wird, wobei die Analyse des Schritts c) nur auf die nicht maskierten Pixel angewendet wird, wobei vorzugsweise alle Pixel der Maske auf denselben Wert initialisiert werden, der dem Fehlen einer Maskierung entspricht.

6. Verfahren nach einem der Ansprüche 1 bis 5, wobei die Erkennung in mindestens zwei benachbarten Regionen von Interesse positiv ist, wobei das Verfahren die Zusammenführung dieser Regionen von Interesse und die entsprechende Aktualisierung der zugehörigen Koeffizienten der Aufmerksamkeitskarte für die Verarbeitung mindestens eines folgenden Bildes umfasst.

7. Verfahren nach einem der Ansprüche 1 bis 6, wobei die Größe des mindestens einen Bereichs von Interesse im Vergleich zu den Abmessungen eines Analysefensters vergrößert wird, das durch die erste Erkennungsstufe gegeben ist, auf der die Analyse des Schritts c) durchgeführt wird.

8. Verfahren nach Anspruch 7, wobei zur Bestimmung der vergrößerten Größe des mindestens einen Bereichs von Interesse eine morphologische Dilatation durchgeführt wird.

9. Verfahren nach Anspruch 8, wobei die Parameter der morphologischen Dilatation fest sind.

10. Verfahren nach Anspruch 8, wobei die Parameter der morphologischen Dilatation dynamisch sind, insbesondere abhängig von der Größe des interessierenden Bereichs oder der Bewegungsgeschwindigkeit des Objekts.

11. Computerprogrammprodukt, das eine Reihe von Befehlszeilen umfasst, die auf einem Datenträger gespeichert oder von einem Server herunterladbar sind, um bei Ausführung auf einem Computer die Bildverarbeitung gemäß dem in einem der vorstehenden Ansprüche definierten Verfahren zu bewirken.


**Claims**

1. A method for processing a video image stream, wherein the method is computer-implemented, to detect predefined objects
   , comprising the steps of:

   a) providing an attention map in a space of positions and scales of an image from the video image stream, the value of the attention map at a point being representative of a probability of detecting the predefined objects at a first detection scale at a pixel of said image from the video image stream associated with said point,
   b) for each point on the attention map, selecting that point when the value of the attention map at that point is greater than a value resulting from a random draw, a bias being introduced into the map to confer a non-zero probability of selection at every point,
   c) analysing the pixels associated with the selected points to detect the predefined objects at the first detection scale,
   d) when a detection is positive at at least one point following

   the analysis carried out in c), define at least one
   region of interest in said image of the video image stream, the size of the at least one region of interest being at least that of the first detection scale, and updating the attention map for processing the next image by setting all pixels in this region of interest to a value greater than the bias,

   e) repeating steps a) to d) for each new frame of the video stream

   and/or for the current frame by substituting the first detection scale with a second detection scale different from the first detection scale.

2. A method according to claim 1, wherein the attention map is initialised by assigning the same value to all points, in particular a value equal to the bias.

3. A method according to any one of the preceding claims, being applied to pedestrian detection.

4. A method according to any one of claims 1 to 3, wherein the coefficients of the attention map take either an extreme value that forces selection, in particular in each region of interest, or the value of the bias otherwise.

5. A method according to any one of claims 1 to 4, wherein a binary mask is generated in step b) from the attention map and the random draw, this binary mask being applied to the image of the video image stream, the analysis in step c) being performed only on the unmasked pixels, all pixels of the mask preferably being initialised to the same value corresponding to the absence of masking.

6. A method according to any one of claims 1 to 5, wherein detection is positive in at least two adjacent regions of interest, the method comprising merging these regions of interest and correspondingly updating the associated coefficients of the attention map for the processing of at least one subsequent image.

7. A method according to any one of claims 1 to 6, wherein the size of the at least one region of interest is enlarged relative to the dimensions of an analysis window given by the first detection scale at which the analysis of step c) is performed.

8. A method according to claim 7, wherein morphological dilation is performed to determine the enlarged size of the at least one region of interest.

9. A method according to claim 8, wherein the parameters of the morphological dilation are fixed.

10. A method according to claim 8, wherein the parameters of the morphological dilation are dynamic, in particular depending on the size of the region of interest or the speed of movement of the object.

11. A computer program comprising a set of instruction lines stored on a medium or downloadable from a server, which, when executed on a computer, cause images to be processed in accordance with the method as defined in any of the preceding claims.

Flux vidéo → Détection → Résultat de détection →

## Fig. 1
### ETAT DE LA TECHNIQUE

X

largeur1

Détection 1

x1,y1

hauteur1

largeur2

Détection 2

x2,y2

hauteur2

IMAGE

## Fig. 2

V

Flux vidéo

Masque binaire par pixel et échelle (initialisé à 1)

21

10

Détection

11

Résultat de détection

12

(vers GUI ou système de niveau supérieur)

Données d'apprentissage du calcul de probabilité

Mise à jour de la carte de probabilité par pixel et échelle

14

15

Tirage aléatoire

20

## Fig. 3

Fig. 4A

Fig. 4B

16

Fig. 5

Fig. 6

**RÉFÉRENCES CITÉES DANS LA DESCRIPTION**

**Documents brevets cités dans la description**

- WO 2017005930 A1

- US 9740949 B1

**Littérature non-brevet citée dans la description**

- **PIOTR DOLLAR et al.** Fast Feature Pyramids for Object Detection. *SUBMISSIONS TO IEEE TRANSACTIONS ON PATTERN ANALYSIS AND MACHINE INTELLIGENCE*, September 2014

- **BYOUNG CHUL KO et al.** Fast Human Detection for Intelligent Monitoring Using Surveillance Visible Sensors. *Sensors*, 2014, vol. 14, 21247-21257